# EUROPÄISCHE PATENTSCHRIFT

(11) **EP 4 509 670 B1**
(45) Veröffentlichungstag und Bekanntmachung des Hinweises auf die Patenterteilung: **25.06.2025**
(21) Anmeldenummer: 24194356.2
(22) Anmeldetag: 13.08.2024
(51) Int. Cl.: E04B 1/10, F16B 5/02, F16B 37/08, E04B 1/61

(54) **WANDSYSTEM UMFASSEND EINE FERTIGBAUWAND UND VERFAHREN ZUM ERSTELLEN EINES WANDSYSTEMS**
WALL SYSTEM COMPRISING A PREFABRICATED WALL AND METHOD FOR PRODUCING A WALL SYSTEM
SYSTÈME DE PAROI COMPRENANT UNE PAROI PRÉFABRIQUÉE ET PROCÉDÉ DE FABRICATION D'UN SYSTÈME DE PAROI

(30) Priorität: 15.08.2023 EP 23191445
(43) Veröffentlichungstag der Anmeldung: 19.02.2025
(73) Patentinhaber: Hübscher Holzbau AG, 8222 Beringen (CH)
(72) Erfinder: Hübscher, Michael, 8465 Wildensbuch (CH)
(74) Vertreter: Hepp Wenger Ryffel AG

(56) Entgegenhaltungen:
- DE-U- 1 818 597
- DE-U1- 20 220 778
- US-B2- 7 594 367

## Beschreibung

Die vorliegende Erfindung betrifft ein Wandsystem umfassend eine Fertigbauwand. Die vorliegende Erfindung betrifft weiter ein Verfahren zum Erstellen eines Wandsystems.

Wandsysteme umfassend Fertigbauwände finden zunehmend Anwendung beim Bau von Häusern und Holzstrukturen. Eine Fertigbauwand ist eine Wand, die in einem Werk vorgefertigt und als komplettes Bauelement zur Baustelle transportiert wird. Solche Fertigbauwände sind Teil eines Fertigbaus, bei dem verschiedene Bauelemente industriell vorproduziert werden, um dann vor Ort zu einem Gebäude zusammengefügt zu werden. Die Fertigbauwand kann unterschiedliche Materialien und Ausführungen umfassen, je nach den spezifischen Anforderungen des Bauprojekts. Bei der Verwendung von Holz werden solche Bauten von Häusern und Fertigbauwänden auch als Holzrahmenbau bezeichnet, oder auch als Holzständerbau bzw. als Holztafelbau. Ein Vorteil des Holzrahmenbaus ist die schnelle Bauzeit. Holzrahmen, nachfolgend auch als Fertigbauwände bezeichnet, können in einem Werk vorgefertigt werden und danach auf der Baustelle sehr schnell zusammengesetzt werden, was die Bauzeit von Häusern erheblich verkürzen kann. Die Holzrahmenbauweise ist zudem leicht und flexibel, was eine Vielzahl von Gestaltungsmöglichkeiten und Designs erlaubt, sodass auch ein Bau von individuell gestalteten Häusern relativ einfach möglich ist. Da ein mittels Holzrahmenbau gefertigtes Haus zudem nachhaltig, energieeffizient und kosteneffizient ist, steigt der Bedarf nach derart gebauten Holzhäusern.

Beim Bau von Fertigbauten wie Holzhäusern wird üblicherweise vorerst ein Einbauort wie eine Bodenplatte, eine Bauplattform, oder ein Fundament, zum Beispiel in Form eines Betonfundaments erstellt, auf dem die vorgefertigten Holzrahmenbauelemente, üblicherweise in Form von Holzrahmenwände, bzw. von vorgefertigten Fertigbauwänden, verankert werdend. Der Einbauort, z.B. eine Bodenplatte, weist innerhalb ihrer Grundfläche oft deutliche Höhenabweichungen und Unebenheiten auf. Auf einer Baustelle ist daher die Tätigkeit des sogenannten Nivellierens von zentraler Bedeutung. Im Kontext des Fertigbaus, insbesondere des Holzbaus, können unter Nivellieren insbesondere die folgenden zwei Aspekte verstanden werden:
A: Festlegung der absoluten Höhe einer Fertigbauwand bzw. einer Mehrzahl von Fertigbauwänden.
B: Horizontal Ausrichtung der zumindest einen Fertigbauwand durch Höhenausgleich zwischen der Fertigbauwand und der Bodenplatte.

Üblicherweise wird dieses anspruchsvolle und zeitaufwändige Nivellieren derart gelöst, dass ein horizontal verlaufender Balken, auch als Montageschwelle bezeichnet, nivelliert auf die Bodenplatte aufgebracht und danach mit der Bodenplatte befestigt wird, wobei zum Nivellieren beispielsweise Unterlegklötzchen verwendet werden, die mit Hilfe einer Wasserwaage derart positioniert werden, dass die Montageschwelle horizontal verläuft. In einem nachfolgenden Arbeitsgang wird dann die Fertigbauwand auf die Montageschwelle abgesetzt und an der Montageschwelle und/oder an der Bodenplatte befestigt.

Solche bekannte Verbindungselemente und Verbindungssysteme zur Befestigung von Holzstrukturen wie Fertigbauwände bzw. Holzrahmenbauelementen weisen somit den Nachteil auf, dass zeitaufwändige Vorarbeiten erforderlich sind, dass diese Vorarbeiten auf der Baustelle auszuführen sind, und dass die Vorarbeiten insbesondere dann sehr anspruchsvoll sind, wenn eine Vielzahl von Fertigbauwänden auf einer Bodenplatte, insbesondere einer sehr unebenen Bodenplatte, anzuordnen und zu befestigen sind.

Das Dokument EP2738401B1 offenbart ein Schnellmontageelement, welches ein schnelles Befestigen von Fertigbauwänden an einem Einbauort erlaubt. Üblicherweise werden diese Schnellmontageelemente bereits werkseitig in die Fertigbauwand eingelassen. Am Aufstellort werden vor der Montage der Fertigbauwand Gewindestangen, beispielsweise in Form von Ankerschrauben, in den Untergrund eingebracht. Daraufhin werden die Fertigbauwände am Aufstellort abgesenkt, sodass die Gewindestangen in die Schnellmontageelemente eingreifen und von diesen gehalten werden. Solche Schnellmontageelemente weisen jedoch den Nachteil auf, dass nur ein einmaliges Verbinden von Schnellmontageelement und Gewindestange möglich ist, was bedeutet, dass diese Verbindung anschliessend nicht mehr oder nur sehr aufwändig gelöst werden kann. Nachträgliche Korrekturen und Anpassungen derart befestigter Fertigbauwände sind somit nicht mehr möglich oder nur noch mit einem erheblichen Aufwand möglich. Zum Einstellen der Höhe dient eine auf ein Gewinde aufgeschraubte Mutter. Es ist äusserst umständlich und daher zeitaufwändig diese Mutter zu drehen. Zudem ist die Tragfähigkeit dieser Schnellmontageelemente begrenzt, sodass zum Tragen schwererer Fertigbauwände der Gebrauch von zusätzlichen Schnellmontageelementen erforderlich ist.

US7594367B2 offenbart eine Verbindungsstruktur für eine Blockwand; eine Vielzahl von Verbindern, die innerhalb der Wand angrenzend an die Randfläche der Wand gehalten werden; eine Mehrzahl von Befestigungsmittel-Zugangsdurchgängen in der Wand, wobei sich jeder Befestigungsmittel-Zugangsdurchgang zwischen einem jeweiligen Verbinder und der Randfläche der Wand erstreckt; und eine Mehrzahl von Befestigungsmitteln, wobei sich jedes Befestigungsmittel durch einen jeweiligen Befestigungsmittel-Zugangsdurchgang erstreckt und ein erstes Ende, das mit einem jeweiligen Verbinder verbunden ist, und ein zweites Ende gegenüber dem ersten Ende aufweist, wobei sich das zweite Ende über die Randfläche der Wand hinaus erstreckt.

Ausgehend von dem genannten Stand der Technik liegt der vorliegenden Erfindung die Aufgabe zugrunde, solche und weitere Nachteile des Standes der Technik zumindest zu reduzieren und insbesondere ein Wandsystem umfassend Fertigbauwände sowie ein Verfahren zum Erstellen eines Wandsystems umfassend Fertigbauwände anzugeben, welches ein einfacheres und effizienteres Erstellen von Wandsystemen umfassend Fertigbauwände erlaubt.

Diese Aufgabe wird durch ein Wandsystem sowie ein Verfahren zum Erstellen eines Wandsystems aufweisend die Merkmale der unabhängigen Ansprüche 1 und 13 gelöst. Vorteilhafte Ausgestaltungen und Weiterbildungen sind Gegenstand der abhängigen Ansprüche.

Die Aufgabe wird gelöst mit einem Wandsystem umfassend eine Fertigbauwand und mehrere Befestigungsvorrichtungen, wobei die Fertigbauwand mittels mehreren Befestigungsvorrichtungen mit einem Einbauort in der Form einer Bauplattform oder eines Fundaments verbunden ist, wobei die Fertigbauwand für jede der Befestigungsvorrichtungen mit einer Ausnehmung versehen ist, wobei jede der Befestigungsvorrichtungen ein Montageelement, ein Befestigungselement und ein Arretierelement umfasst, wobei das Montageelement eine Längsachse aufweist und in Verlaufsrichtung der Längsachse einen ersten Teilabschnitt und anschliessend einen zweiten Teilabschnitt aufweist, wobei das Montageelement entlang des ersten Teilabschnittes eine konzentrisch zur Längsachse verlaufende, vorzugsweise als Sackloch ausgestaltete Innenbohrung mit einem Innengewinde aufweist, und wobei das Montageelement im Bereich des zweiten Teilabschnittes eine senkrecht zur Längsachse verlaufende Querbohrung aufweist, wobei das Befestigungselement vorzugsweise über den Einbauort vorsteht, wobei das Befestigungselement ein Aussengewinde umfasst, welches in die Innenbohrung eingeschraubt ist, wobei das Montageelement in der zugehörigen Ausnehmung angeordnet ist und die Fertigbauwand vorzugsweise auf dem Montageelement aufliegt, und wobei das Arretierelement durch die Querbohrung des Montageelementes und zumindest teilweise durch die Fertigbauwand verläuft.

Die Aufgabe wird weiter gelöst mit einem Verfahren zum Erstellen eines Wandsystems, indem eine Fertigbauwand aufweisend Ausnehmung erstellt wird, indem eine Mehrzahl von Befestigungselementen umfassend Aussengewinde an vorherbestimmten Einbauorten derart verankert werden, dass die Aussengewinde, vorzugsweise in vertikaler Richtung verlaufend, über die Einbauorte vorstehen, indem je ein Montageelement durch Drehen um dessen Längsachse auf die jeweiligen Aussengewinde aufgeschraubt werden und durch das Drehen zudem jedes Montageelement auf eine vorherbestimmte Höhe eingestellt wird, indem die Fertigbauwand abgesenkt wird bis die Montageelemente zumindest teilweise in die entsprechende Ausnehmung zu liegen kommen, und indem jeweils ein Arretierelement durch die Querbohrung des Montageelementes und zumindest teilweise durch die Fertigbauwand verlaufend eingeführt wird, sodass die Fertigbauwand über die Befestigungsvorrichtung fest mit dem Einbauort verbunden ist. Der Einbauort ist eine Bauplattform oder ein Fundament, und die Befestigungselemente werden verdrehfest im Einbauort verankert.

Vorzugsweise weist die Fertigbauwand eine vorbereitete Bohrung zur Aufnahme des Arretierelementes auf, wobei diese Bohrung derart angeordnet ist, dass das eingeführte Arretierelement sowohl durch diese Bohrung als auch durch die Querbohrung des Montageelementes verläuft. Der Durchmesser des Arretierelementes und der Bohrung sind vorzugsweise derart gegenseitig angepasst ausgestaltet, dass sich zwischen Arretierelement und Fertigbauwand, und vorzugsweise auch zwischen dem Arretierelement und dem Montagelement eine formschlüssige Verbindung ergibt. In einer weiteren Ausführungsform könnte die Bohrung zur Aufnahme des Arretierelementes auch erst vor Ort erstellt werden, vorzugsweise nachdem die Fertigbauwand auf das Montageelement abgesenkt wurde.

Das erfindungsgemässe Wandsystem weist den Vorteil auf, dass alle erforderlichen Arbeitsschritte zum Aufbau des Wandsystems umfassend Fertigbauwände, beispielsweise Holzrahmenbauwände, beziehungsweise der Aufbau des Fertigbaus am Einbauort, effizient, kostengünstig und zuverlässig erfolgen, wobei jederzeit auch Korrekturen vorgenommen werden können. Beim Aufbau des Wandsystems auf der Baustelle ist ein exaktes Positionieren und Nivellieren der Fertigbauwände sowie ein richtiges Verankern derselben von zentraler Bedeutung. Beim Aufbau des erfindungsgemässen Wandsystems werden in einem ersten Arbeitsschritt Befestigungselemente umfassend ein Aussengewinde derart in einem Untergrund verankert, dass die Aussengewinde über den Untergrund vorstehen. Die Befestigungselemente mit Außengewinde, welche fest und unbeweglich am oder im Untergrund verankert werden, sind als Gewindebefestigungselement ausgestaltet, umfassend zumindest eine Gewindestange. Das Gewindebefestigungselement kann beispielsweise als reine Gewindestange, oder auch als Schraube, als Gewindeanker oder als Gewindedübel ausgestaltet sein. Das Gewindebefestigungselement könnte beispielsweise auch als eine Kombination von Flansch und Gewindestange ausgestaltet sein, indem die Gewindestange fest mit dem Flansch verbunden ist, und der Flansch mit Hilfe von Verankerungsmitteln wie Schrauben fest am Untergrund befestigbar ist. Ein solches Befestigungselement mit Aussengewinde wird fest und unbeweglich im Untergrund verankert, sodass das Aussengewinde nach erfolgter Verankerung des Befestigungselement drehfest, das heisst nicht mehr drehbar im Untergrund fixiert ist. Das Befestigungselement kann mit verschiedenen Verankerungstechniken, wie Epoxidharz, Injektionsmörtel, Spezialmörtel, Dübel, direktem Eingießen oder mechanischen Verankerungssystemen, fest im Einbauort, beispielsweise Beton oder Holz, befestigt werden, sodass das Befestigungselement drehfest und unbeweglich im Einbauort verankert ist. Das Befestigungselement ist vorzugsweise nur als eine Gewindestange ausgestaltet, besonders bevorzugt mit einem durchgängigen Aussengewinde.

Das über den Untergrund vorstehende Aussengewinde, beziehungsweise die über den Untergrund vorstehende Gewindestange des Befestigungselementes verläuft besonders bevorzugt in vertikaler Richtung. Vorzugsweise verlaufen die Aussengewinde aller verankerten Befestigungselemente in vertikaler Richtung.

Solche Befestigungselemente, beispielsweise ausgestaltet als Bolzenanker, sind sehr einfach zu positionieren und im Untergrund zu befestigen. Daraufhin werden Montageelemente auf die vorstehenden Aussengewinde aufgeschraubt. Die Montageelemente umfassen vorteilhafterweise eine zumindest teilweise zylinderförmige Aussenkontur, vorzugweise mit einem derartigen Durchmesser, dass das Montageelement gut in der Hand liegt, und somit mit den Fingern oder mit der Hand sehr angenehm gedreht werden kann. Die absolute Höhe jedes Montageelementes, beziehungsweise der Abstand zwischen der Oberfläche des Einbauortes und dem Montageelement, kann durch ein entsprechendes Drehen des Montagelementes um dessen Längsachse individuell eingestellt werden, wobei die Montageelemente vorzugsweise als Auflage für die Fertigbauwand dienen, sodass durch die Höheneinstellung der einzelnen Montageelemente letztendlich die Höheneinstellung beziehungsweise auch die Nivellierung der gesamten Fertigbauwand erfolgt.

Sobald alle einer Fertigbauwand zugeordneten Montageelemente eingestellt sind, kann die Fertigbauwand abgesenkt werden, wobei die Fertigbauwand an deren Unterkante Ausnehmungen zur zumindest teilweisen Aufnahme der Montageelemente aufweist. Die Fertigbauwand wird vorzugsweise abgesenkt, bis diese auf den Montageelementen aufliegt und von diesen getragen wird. Nach diesem Arbeitsschritt kann nochmals überprüft werden, ob sich alle Montageelemente in der gewünschten Position befinden. Ansonsten könnte die Fertigbauwand nochmals angehoben und die Höhe des Montageelementes durch ein entsprechendes Drehen korrigiert werden. Sobald die Fertigbauwand zufriedenstellend auf den Montageelementen aufliegt, wird deren gegenseitige Verbindung gesichert, indem Arretierelemente, vorzugsweise in Form von Stabdübeln, durch die Fertigbauwand und durch das Montageelement hindurch eingeführt werden, sodass die Fertigbauwand insbesondere auch gegen ein Abheben, insbesondere ein vertikales Verschieben nach oben, und, durch die Aufnahme von Druckkräften, vorzugsweise auch gegen ein vertikales Verschieben nach unten gesichert ist. Falls erforderlich kann sogar in diesem Zustand nochmals einen Höhenkorrektur der Fertigbauwand vorgenommen werden, indem die Arretierelemente nochmals entfernt werden, die Fertigbauwand nochmals angehoben wird, und durch ein Drehen entsprechender Montageelemente deren Höhe korrigiert wird. Danach wird die Fertigbauwand wieder abgesenkt und das Arretierelement wieder eingeführt. Das erfindungsgemässe Wandsystem weist somit den Vorteil auf, dass eine Korrektur oder eine nachträgliche Anpassung der Höheneinstellung einfach möglich ist. Das erfindungsgemässe Wandsystem weist zudem den Vorteil auf, dass auf eine vorgängig zu montierende Montageschwelle, auf welcher nachträglich die Fertigbauwand aufgebaut werden könnte, verzichtet werden kann, da das erfindungsgemässe Wandsystem eine Höheneinstellung und allfällige Korrekturen der Höheneinststellung bzw. der Neigung gegenüber der Horizontalen auf einfache Weise zulässt. Der Verzicht auf eine Montageschwelle reduziert die Baukosten und erlaubt zudem eine bessere Verankerung der Fertigbauwände. Vorteilhafterweise sind die Querbohrung des Montageelementes, der Durchmesser des Arretierelementes sowie die Bohrung in der Fertigbauwand zur Aufnahme des Arretierelementes bzw. der Durchmesser des Arretierkanals derart gegenseitig angepasst ausgestaltet, dass die Fertigbauwand über den Arretierkanal formschlüssig, oder im Wesentlichen spielfrei, oder vorzugsweise zumindest in vertikaler Richtung spielfrei mit dem Arretierelement verbunden ist.

Das Montageelement ist vorzugsweise zur Übertragung grösserer, zwischen der Fertigbauwand und dem Befestigungselement wirkender Kräfte ausgestaltet, wobei das Montageelement einen ersten Längsabschnitt aufweist, welcher an das Aussengewinde anschraubbar ist, wobei der erste Längsabschnitt ein zur Übertragung der Kräfte entsprechend dimensionierte Wandstärke aufweist, und wobei das Montageelement einen zweiten Längsabschnitt aufweist, welcher zur Aufnahme des Arretierelementes eine Querbohrung aufweist, und welcher zur Übertragung der angreifenden Kräfte ebenfalls entsprechend angepasst dimensioniert bzw. ausgestaltet ist.

Besonders vorteilhaft weist das Montageelement an dessen einem Ende, am zur Querbohrung gegenüberliegenden Ende, ein vorstehendes Stützteil auf, welches vorzugsweise flanschartig ausgestaltet ist, wobei die Fertigbauwand vorzugsweise zumindest während der Montage an diesem Stützteil aufliegt. Diese Ausgestaltung des Montageelementes weist zudem den Vorteil auf, dass die montierte Fertigbauwand auch sehr geringe Höhen bzw. eine sehr geringe Distanz bezüglich des Untergrunds aufweisen kann.

Das Montageelement ist vorzugsweise einteilig gefertigt, und besteht vorzugsweise aus Metall oder einem faserverstärkten Kunststoff.

In einer Vorteilhaften Ausgestaltung weist das Montageelement eine Koppelstelle bzw. eine Werkzeugeingriffsstelle auf, an welche beispielsweise eine Messvorrichtung, z.B. ein Prisma befestigbar ist, um beispielsweise mit einem Tachymeter die Höhe des Montageelementes zu messen, um danach die gewünschte Höhe des Montageelementes einzustellen. Die Einstellung der Höhe kann von Hand oder über einen entsprechenden Antrieb des Montageelementes auch automatisch erfolgen.

Verschiedene Ausführungsformen der Erfindung werden nachfolgend anhand von Zeichnungen beschrieben, wobei gleiche oder entsprechende Elemente grundsätzlich mit gleichen Bezugszeichen versehen sind. Es zeigen:
- Fig. 1: einen Längsschnitt entlang der Schnittlinie A-A durch das erfindungsgemässe Wandsystem;
- Fig. 2: eine Seitenansicht eines Teils des Wandsystems gemäss Fig. 1;
- Fig. 3: ausschnittweise einen Querschnitt entlang der Schnittline B-B durch das Wandsystem gemäss Fig. 2;
- Fig. 4: eine perspektivische Ansicht auf ein erstes Ausführungsbeispiel eines Montageelements;
- Fig. 5: einen Längsschnitt durch das Montageelement gemäss Fig. 4;
- Fig. 6: einen Querschnitt durch das Montageelement gemäss Fig. 5 entlang der Schnittlinie C-C;
- Fig. 7: einen Querschnitt durch das Montageelement gemäss Fig. 5 entlang der Schnittlinie D-D;
- Fig. 8: eine perspektivische Ansicht eines weiteren Ausführungsbeispiels eines Montageelementes;
- Fig. 9: einen Längsschnitt durch das Montageelement gemäss Fig. 8, wobei dieses am Einbauort montiert ist;
- Fig. 10: eine perspektivische Ansicht eines weiteren Ausführungsbeispiels eines Montageelementes;
- Fig. 11: eine Seitenansicht eines weiteren Ausführungsbeispiels eines Montageelementes;
- Fig. 12: eine Draufsicht eines weiteren Ausführungsbeispiels eines Montageelementes, teilweise im Schnitt.

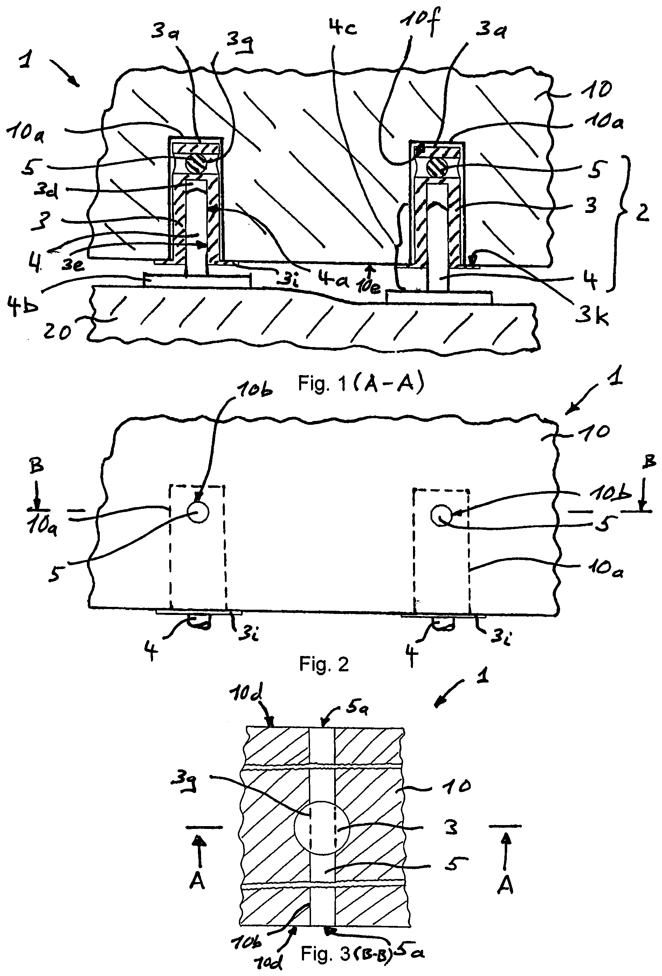

Die Figuren 1 bis 3 zeigen ein Ausführungsbeispiel eines erfindungsgemässen Wandsystems 1 umfassend eine Fertigbauwand 10 und eine Mehrzahl von Befestigungsvorrichtungen 2, wobei jede der Befestigungsvorrichtungen 2 ein Montageelement 3, ein Befestigungselement 4 und ein Arretierelement 5 umfasst. Figur 1 zeigt einen Längsschnitt durch das Wandsystem 1 entlang der Schnittline A-A gemäss Figur 3, wobei das Befestigungselement 4 nicht als geschnitten dargestellt ist. Im dargestellten Ausschnitt gemäss Figur 1 wird die Fertigbauwand 10 von zwei Befestigungsvorrichtungen 2 getragen und gehalten. Es könnten jedoch auch zusätzliche Befestigungsvorrichtungen 2 zum Tragen der Fertigbauwand 10 angeordnet sein. Zudem könnten auch mehrere Fertigbauwände 10 angeordnet und von Befestigungsvorrichtungen 2 getragen sein. Jedes der dargestellten Befestigungselemente 4 ist über einen ersten Befestigungsabschnitt 4b fest, vorzugsweise verdrehfest, mit dem Einbauort 20, beispielsweise einer Betonplatte, verbunden. Die Verbindung zwischen dem Befestigungselement 4 bzw. dem ersten Befestigungsabschnitt 4b und dem Einbauort 20 ist nicht im Detail dargestellt, und könnte beispielsweise mittels einer Schraubverbindung oder mittels einer Klebeverbindung erfolgen. Das Befestigungselement 4 umfasst einen zweiten Befestigungsabschnitt 4c aufweisend ein Aussengewinde 4a. Der zweite Befestigungsabschnitt 4c verläuft in vertikaler Richtung nach oben. Das Montageelement 3 umfasst einen Innenbohrung 3d mit einem bezüglich dem Aussengewinde 4a angepassten Innengewinde 3e, sodass das Montageelement 3 durch ein Drehen um dessen Längsachse auf das Aussengewinde 4a aufschraubbar und dadurch am Befestigungselement 4 befestigbar ist. Durch das Drehen bzw. das Aufschrauben des Montageelementes 3 auf das Aussengewinde 4a wird zudem die Distanz zwischen dem ersten Befestigungsabschnitt 4b und dem Montageelement 3 verändert, beziehungsweise wird die Eindringtiefe des zweiten Befestigungsabschnittes 4c in die Innenbohrung 3d verändert, sodass durch ein entsprechendes Drehen des Montageelementes 3 um dessen Längsachse der Abstand des Montageelementes 3 bezüglich dem ersten Befestigungsabschnitt 4b beziehungsweise der Abstand zwischen dem Montageelement 3 und der Oberfläche des Einbauorts 20 einstellbar ist. Wie aus Figur 1 ersichtlich, kann die Oberfläche des Einbauortes 20 uneben sein, wobei die Montageelemente 3 vorzugsweise wie in Figur 1 dargestellt derart eingestellt werden, dass beide Montageelemente 3 in horizontaler Richtung dieselbe absolute Höhe aufweisen, und dadurch beispielsweise einen vorzugsweise horizontal verlaufenden Anschlag für eine Unterkante 10e der Fertigbauwand 10 ausbilden, sodass die Unterkante 10e der Fertigbauwand 10 waagrecht verläuft. Ein solches Einstellen der Höhe der einzelnen Montageelemente 3 wird auch als ein sogenanntes Nivellieren bezeichnet, weil dadurch die Höhe als auch der Verlauf der Fertigbauwand 10 bezüglich der Horizontalen eingestellt wird.

Bevor die Montage der Fertigbauwand 10 erfolgt, werden in vorbereitenden Verfahrensschritten die Befestigungselemente 4 mit dem Einbauort verbunden, und werden in einem nachfolgenden Schritt die Montageelement 3 auf die jeweiligen Befestigungselemente 4 aufgeschraubt und durch ein entsprechendes Drehen auf eine vorherbestimmte Höhe eingestellt. Wie aus Figur 1 ersichtlich weist die Fertigbauwand 10 vorbereitete Ausnehmung 10a zur Aufnahme jeweils eines Montageelementes 3 auf, wobei der Montageort der Befestigungsvorrichtungen 2 und die Positionierung der Ausnehmung 10a in der Wand 10 derart gegenseitig angepasst angeordnet sind, dass die Fertigbauwand 10, nachdem die Höhe der einzelnen Montageelemente 3 eingestellt ist, abgesenkt werden kann, und dabei je ein Montageelement 3 in eine zugeordnete Ausnehmung 10a zu liegen kommt, sodass die Fertigbauwand 10 nach dem Absenken von den Montageelementen 3 getragen wird.

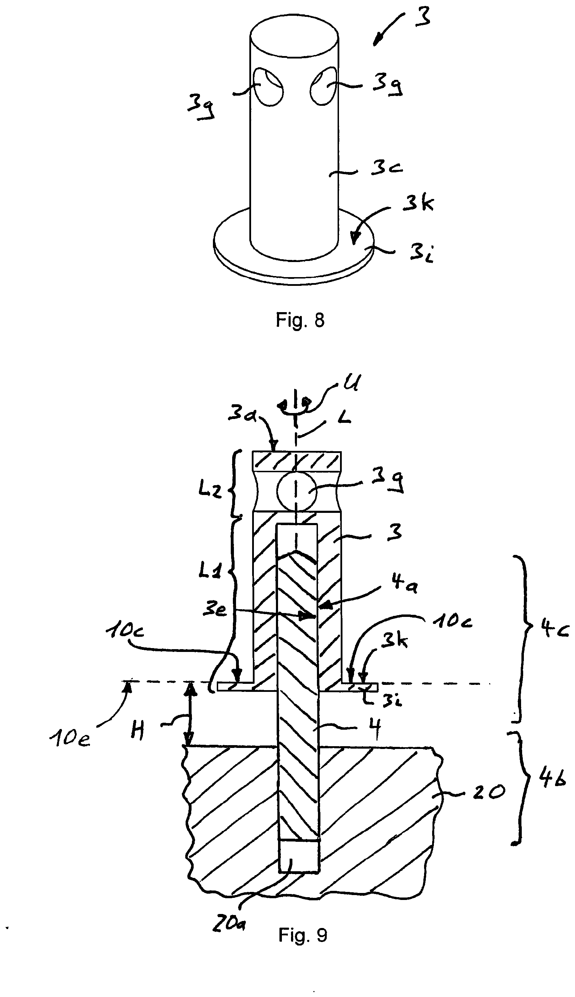

Vorzugsweise werden, wie in Figur 9 dargestellt, Bohrungen 20a für die Befestigungselemente 4 basierend auf einem vorgegebenen bzw. berechneten Bohrplan am Einbauort 20 erstellt, wobei diese Löcher für die Befestigungselemente 4 manuell oder vorzugsweise automatisch am Einbauort 20 positioniert und gebohrt werden, und wobei vorzugsweise basierend auf einem Höhenplan die Höhe H der einzelnen Montageelemente 3 eingestellt wird, entweder manuell oder vorzugsweise automatisch über eine am Montageelement 3 angreifende Antriebsvorrichtung, welche das Montageelement 3 entsprechend dreht.

Im dargestellten Ausführungsbeispiel umfasst jedes Montageelement 3 ein flanschförmig vorstehendes Stützteil 3i mit einer Stützfläche 3k, wobei diese Stützteile 3i die Fertigbauwand 10 über deren am Stützteil 3i aufliegende Unterkante 10e tragen können. Bevorzugt wird die Fertigbauwand 10 nach erfolgtem Absenken nur von den Stützteilen 3i getragen. Die Ausnehmung 10a kann jedoch auch derart ausgestaltet sein, dass diese am Grund eine zweite Auflagefläche 10f ausbildet, sodass nach dem Absenken der Fertigbauwand 10 jeweils die oberen Stirnseiten 3a der Montageelemente 3 an der zweiten Auflagefläche 10f anliegt und dabei die Fertigbauwand 10 tragen. Die Fertigbauwand 10 wird nach deren Absenken somit vorzugsweise entweder mehrheitlich oder vollständig über die Stützteile 3i, mehrheitlich oder vollständig über die obere Stirnseite 3a oder über eine Kombination von Stützteile 3i und obere Stirnseiten 3a getragen.

Nach erfolgtem Absenken der Fertigbauwand 10 auf die Montageelemente 3 wird anschliessend ein durch das Montageelement 3 und die Fertigbauwand 10 verlaufendes Arretierelement 5 eingeführt, um die Fertigbauwand 10 insbesondere gegen ein Abheben vom Montageelement 3 zu sichern, bzw. um die Fertigbauwand 10 mit Hilfe der Befestigungsvorrichtung 2 mit dem Einbauort 20 zu verbinden. Das Arretierelement 5 kann zudem, falls vorteilhaft, derart angeordnet und mit der Fertigbauwand 10 verbunden sein, dass dieses die Fertigbauwand 10 zumindest teilweise oder sogar vollständig trägt, und somit die von der Fertigbauwand 10 nach unten wirkenden Druckkräfte aufnimmt. Wenn die Fertigbauwand 10 vollständig von den Arretierelementen 5 getragen wird, bedeutet dies, dass die Fertigbauwand 10 nicht mehr tragend an der oberen Stirnseiten 3a bzw. nicht mehr an der Stützfläche 3k aufliegt.

Figur 2 zeigt eine Seitenansicht des Wandsystems 1 gemäss Figur 1, wobei die Befestigungselemente 4 nur teilweise dargestellt sind. Figur 2 zeigt strichliert die in der Fertigbauwand 10 vorgefertigten Ausnehmungen 10a, in welchen das Montageelement 3 angeordnet ist, wobei vom Montagelement 3 nur das Stützteil 3i dargestellt ist. Die Fertigbauwand 10 umfasst zu jeder Ausnehmung 10a einen zugeordneten Arretierkanal 10b, durch welchen jeweils das Arretierelement 5 verläuft bzw. einführbar ist. Das Arretierelement 5 ist vorzugsweise stabförmig, beispielsweise als Stabdübel ausgestaltet.

Wie aus den Figuren 1 und 3 ersichtlich weist das Montageelement 3 eine zur Aufnahme des Arretierelementes 5 vorgesehene Querbohrung 3g auf. Figur 3 zeigt einen Schnitt durch das Wandsystem entlang der Schnittlinie B-B gemäss Figur 2, wobei das Montageelement 3 und das Arretierelement 5 nicht geschnitten dargestellt sind. Wie aus Figur 3 ersichtlich ist die Fertigbauwand 10 mit Hilfe des stabförmigen Arretierelementes 5, welches durch den Arretierkanal 10b und die Querbohrung 3g des Montageelementes 3 verläuft, mit dem Montageelement 3 verbunden.

Vorzugsweise werden die Arretierkanäle 10b bereits bei der Herstellung der Fertigbauwand 10 erstellt. Die Arretierkanäle 10b sind vorzugsweise derart angeordnet, dass bei einer auf die Montageelemente 3 abgesenkten und auf diesen aufliegenden Fertigbauwand 10 die Querbohrung 3g des jeweiligen Montageelementes 3 mit dem zugeordneten Arretierkanal 10b fluchtet, sodass das Arretierelement 5 problemlos in die Fertigbauwand 10 und die Querbohrung 3g einführbar ist, und das Arretierelement 5 nach dessen Einführen die in Figur 3 dargestellte Lage einnimmt, und die Fertigbauwand über die Befestigungsvorrichtung 2 somit sicher mit dem Einbauort 20 verbunden ist. Der Arretierkanal 10b könnte jedoch auch erst nach dem Aufsetzen der Fertigbauwand 10 auf das Montageelement 3 erstellt werden. Da beim Montageelement 3 der Abstand zwischen dem Stützteil 3i und der Querbohrung 3g vorgegeben ist, kann die Lage der Querbohrung 3g, wie aus Figur 2 ersichtlich, ausgehend vom Stützteil 3i, auf einfache Weise bestimmt und an der Aussenoberfläche der Fertigbauwand 10 beispielsweise angezeichnet werden, und anschliessend der Arretierkanal 10b in die Fertigbauwand 10 gebohrt werden.

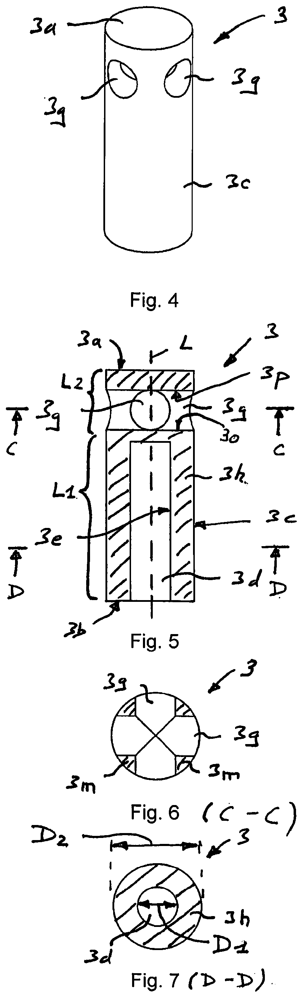

Die Figuren 4 bis 7 zeigen verschiedene Ansichten eines weiteren Ausführungsbeispiels einer Montageelementes 3. Das Montageelement 3 ist zylinderförmig ausgestaltet, weist eine Längsachse L auf, und weist zudem eine obere Stirnseite 3a, eine untere Stirnseite 3b, eine Seitenfläche 3c sowie eine Querbohrung 3g auf. Bei diesen Montageelementen 3 liegt eine Fertigbauwand 10 nach deren Absenken einzig auf den oberen Stirnseiten 3a der Montageelemente 3 auf. Wie in Figur 5 dargestellt weist das Montageelement 3 in Verlaufsrichtung der Längsachse L einen ersten Teilabschnitt L1 und anschliessend einen zweiten Teilabschnitt L2 auf. Das Montageelement 3 weist entlang des ersten Teilabschnittes L1 eine konzentrisch zur Längsachse L verlaufende, als Sackloch ausgestaltete Innenbohrung 3d mit einem Innengewinde 3e auf, wobei der erste Teilabschnitt L1 entlang des Sacklochs eine Aussenwand 3h aufweist. Das Montageelement 3 weist im Bereich des zweiten Teilabschnittes L2 eine senkrecht zur Längsachse L verlaufende Querbohrung 3g auf. Figur 6 zeigt einen Querschnitt durch Figur 5 entlang der Schnittlinie C-C. Im dargestellten Ausführungsbeispiel weist das Montageelement 3 zwei gegenseitig senkrecht verlaufende bzw. in Umfangsrichtung um 90 Grad versetzte Querbohrungen 3g auf. Das Montageelement 3 könnte jedoch auch nur eine einzige Querbohrung 3g aufweisen, oder beispielsweise auch weitere, z.B. drei in Umfangsrichtung um je 60 Grad versetzte Querbohrungen aufweisen. Allenfalls ist dabei der Durchmesser der Querbohrungen 3g zu reduzieren, damit die Verbindungsstellen 3m des Montageelementes 3 eine genügend hohe mechanische Stärke aufweisen. Figur 7 zeigt entlang der Schnittlinie D-D gemäss Figur 5 einen Querschnitt durch den ersten Teilabschnitt L1 des Montageelementes 3, mit Innenbohrung 3d und Seitenwand 3h.

Eine Aufgabe des Montageelementes 3 besteht darin, die an der Fertigbauwand 10 angreifenden Kräfte langfristig zuverlässig zum Befestigungselement 4 zu übertragen, wobei zu berücksichtigen ist, dass an der Fertigbauwand 10 später, nach erfolgter Montage, verschiedenste, teilweise erhebliche Kräfte, beispielsweise verursacht durch angreifende Winde oder Schneedruck, anliegen können, welche sicher zum Befestigungselement 4 zu übertragen sind, wobei es sich bei diesen Kräften situationsabhängig insbesondere um Stoss-, Zug- , Scher- oder Wechselkräfte handeln kann. Die Befestigungsvorrichtung 2 und insbesondere das Montageelement 3 ist somit bevorzugt derart ausgestaltet, dass solche Kräfte ohne Beschädigung des Montageelementes 3 übertragbar sind. Der erste Teilabschnitt L1 dient im wesentlichen dazu Kräfte zwischen dem Montageelement 3 und dem als Gewindestange ausgestalteten zweiten Befestigungsabschnitt 4c zu übertragen. Der zweite Teilabschnitt L2 dient unter anderem dazu Kräfte zwischen dem in der Querbohrung 3g gehaltenen Arretierelement 5 und dem Montageelement 3 zu übertragen. In einer bevorzugten Ausgestaltung weist das Arretierelement 5 bei allen Ausführungsbeispielen, vorzugsweise ausgestaltet als Stabdübel, eine Länge im Bereich von 4 bis 10 mal dem Aussendurchmesser D2 des Montageelementes 3 auf. Dieses unter Umständen relativ lange Arretierelement 5 kann erhebliche Kräfte, insbesondere auch ein erhebliches Drehmoment auf das Montageelement 3 bewirken. Ein mechanisch robustes Montageelement 3 lässt sich beispielsweise, wie in den Figuren 3 bis 7 dargestellte, dadurch erzielen, dass das Montageelement 3 aus einem zylinderförmigen Vollkörper gefertigt ist, in welchen die als Sackbohrung ausgestaltete Innenbohrung 3d und die ein bis zwei Querbohrungen 3g eingelassen sind. Vorzugsweise ist der Aussendurchmesser D2 des Montageelementes 3 zumindest doppelt so gross wie der Innendurchmesser D1 der Innenbohrung 3d, um dadurch eine genügende Dicke der Seitenwand 3h zu erzielen, um Kräfte zuverlässig vom Montageelement 3 auf den zweiten Befestigungsabschnitt 4c des Befestigungselementes 4 zu übertragen. Vorzugsweise liegt der Innendurchmesser D1 in einem Bereich zwischen 6 bis 12 mm, vorzugsweise zwischen 8 und 10 mm. Die Innenbohrung 3d mündet nicht in die Querbohrung 3g sondern ist wie in Figur 5 dargestellt als Sackloch ausgestaltet, weshalb der zweite Teilabschnitt L2 durch die Innenbohrung 3d keine Schwächung erfährt. Vorzugweise weist das Montageelement 3 eine durchgehende Querbohrung 3g auf, wobei zumindest die gegen unten ausgerichtete Unterseite 3o der Querbohrung 3g entlang deren gesamten Länge als eine durchgehende Linie oder Fläche verläuft, das heisst unterbruchfrei ausgestaltet ist. Die Unterseite 3o verläuft somit von der Eintrittsöffnung der Querbohrung 3g bis zu deren Austrittsöffnung der Querbohrung 3g durchgehend geradlinig, wie in Figur 5 dargestellt. Diese Ausgestaltung weist den Vorteil auf, dass ein durch die Querbohrung 3g verlaufendes Arretierelement 5 vorzugsweise entlang der gesamten Länge der Unterseite 3o am Montageelement 3 aufliegen kann. Diese Ausführungsform weist den Vorteil auf, dass das Arretierelement 5 eine grosse Last tragen kann, ohne dass das Arretierelement und/oder das Montageelement 3, insbesondere im Bereich der Querbohrung 3g verformt oder beschädigt wird.

Vorteilhafterweise ist zudem die gegen oben ausgerichtete Oberseite 3p der Querbohrung 3g entlang deren gesamten Länge ebenfalls als durchgehende Linie oder Fläche ausgestaltet, das heisst unterbruchfrei ausgestaltet. Die Oberseite 3p verläuft somit von der Eintrittsöffnung der Querbohrung 3g bis zu deren Austrittsöffnung der Querbohrung 3g durchgehend geradlinig, wie in Figur 5 dargestellt. Diese Ausgestaltung weist den Vorteil auf, dass ein durch die Querbohrung 3g verlaufendes Arretierelement 5 vorzugsweise entlang der gesamten Länge der Oberseite 3p am Montageelement 3 anliegen kann, wenn eine nach oben gerichteter Kraft an der Fertigbauwand 10 angreift. Diese Ausführungsform weist den Vorteil auf, dass das Arretierelement 5 grosse Kräfte auf das Montageelement 3 übertragen kann, ohne dass das Arretierelement und/oder das Montageelement 3, insbesondere im Bereich der Querbohrung 3g verformt oder beschädigt wird.

Vorzugsweise beträgt die Distanz zwischen Ende des Sacklochs und der Querbohrung 3g zumindest ein Viertel des Innendurchmessers D1. Der Durchmesser der Querbohrung 3g ist vorzugsweise derart gewählt, dass die Summe aller Verbindungsstellen 3m zumindest ein Viertel der durch den Aussendurchmesser D2 definierten Gesamtfläche bilden. Dadurch ist sichergestellt, dass die vom Arretierelement 5 über die Querbohrung 3g eingeleiteten, zu erwartenden Kräfte keinen oder nur geringfügigen Schaden am ersten Teilabschnitt L1 verursachen.

In einer weiteren Ausführungsform könnte die Innenbohrung 3d jedoch auch bis in die Querbohrung 3g verlaufen, sodass die Innenbohrung nicht als Sackloch ausgestaltet ist und die Innenbohrung 3d somit mit der Querbohrung 3g verbunden ist. Diese Ausführungsform weist jedoch den Nachteil auf, dass die Unterseite 3o der Querbohrung 3g eine durch die Innenbohrung 3d verursache Öffnung bzw. einen Unterbruch aufweist, was die Tragfähigkeit der Unterseite 3o bzw. die gesamte Stabilität des zweiten Teilabschnittes L2 schwächt. Zudem könnte beim Aufschrauben des Montageelementes 3 auf den zweiten Befestigungsabschnitt 4c dieser Befestigungsabschnitt 4c zumindest teilweise in den Innenraum der Querbohrung 3g vorstehen, und dadurch das Einbringen des Arretierelementes 5 in die Querbohrung 3g behindern.

Wie aus den Figuren 1 bis 3 ersichtlich, muss zum Einführen des Arretierelementes 5 in die auf die Montageelemente 3 abgesenkte Fertigbauwand 10 das Montageelement 3 derart ausgerichtet angeordnet sein, dass die Öffnungen der Querbohrung 3g zur jeweiligen Wandaussenfläche 10d ausgerichtet sind, sodass in Kombination mit dem vorhandenen oder noch auszubildenden Arretierkanal 10b eine durchgehende Öffnung zum Einführen des Arretierelementes 5 entsteht. Die in den Figuren 4 bis 7 dargestellte Ausführungsform des Montageelementes mit zwei in Umfangsrichtung jeweils um 90 Grad versetzt angeordneten Querbohrungen 3g weist den Vorteil auf, dass jeweils nur eine Vierteldrehung des Montageelementes 3 erforderlich ist, um die Querbohrung 3g wieder derart auszurichten, dass die Querbohrung 3g bei abgesenkter Fertigbauwand 10 zur jeweiligen Wandaussenfläche 10d ausgerichtet ist. Auf Grund der Gewinde 3e, 4a wird beim Drehen des Montageelementes 3 die Höhe des Montageelementes 3 bezüglich dem Befestigungselement 4 verändert, wobei die vorhandene Gewindesteigung der Gewinde 3e, 4a beim Drehen letztendlich die Höhenveränderung bestimmt. Die Gewindesteigung ist vorzugsweise derart gewählt, dass eine Umdrehdung um 360° eine Höhenveränderung im Bereich von 0.5 mm bis 2 mm, vorzugsweise von 0.8 mm ergibt. Das in den Figuren 4 bis 7 dargestellte Ausführungsbeispiel eines Montageelementes 3 weist den Vorteil auf, dass die Höhe bzw. die gegenseitige Lage des Montageelementes bezüglich dem Befestigungselement 4 sehr genau, und in kleinen Schritten einstellbar ist, d.h. der kleinste Schritt ist eine Drehung des Montageelementes 3 um 90°, was vorzugsweise einer Höhenveränderung von 0.2 mm entspricht. Die Höhe bzw. der Abstand des Montageelementes 3 von der Oberfläche des Einbauortes 20 kann somit sehr genau eingestellt werden. In einer weiteren, vorteilhaften Ausführungsform könnte das Montageelement 3 auch nur eine einzige Querbohrung 3g aufweist, sodass für den kleinsten Schritt der Höheneinstellung eine Drehung des Montageelementes 3 um 180° erforderlich wäre.

Figur 8 zeigt in einer perspektivischen Ansicht das bevorzugte, auch in Figur 1 dargestellte Montageelement 3. Als einziger Unterschied zur Ausführungsform gemäss den Figuren 4 bis 7 weist das Montageelement 3 gemäss Figur 8 unmittelbar nachfolgend dem zylinderförmigen Abschnitt ein flanschartig vorstehendes Stützteil 3i auf, das eine Stützfläche 3k ausbildet. Vorzugsweise bildet das Stützteil 3i in Verlaufsrichtung der Längsachse L das eine Ende des Montageelementes 3. Das Stützteil 3i ist in Umfangsrichtung vorzugsweise kreisförmig und konzentrisch zur Längsachse L verlaufend ausgestaltet, könnte jedoch auch exzentrisch zur Längsachse L angeordnet sein und/oder könnte in Umfangsrichtung jede beliebige Form aufweist, beispielsweise auch rechteckig oder quadratisch, um dadurch beispielsweise eine für die Fertigbauwand 10 grössere oder besser angepasste Stützfläche 3k auszubilden. Das Stützteil 3i kann als separates Teil ausgestaltet sein, welches mit dem restlichen Montageelement 3 fest verbunden ist. Besonders vorteilhaft ist das Montageelement 3 umfassend das Stützteil 3i einteilig bzw. einstückig ausgestaltet, indem dieses zum Beispiel aus einem einigen Grundkörper gefertigt wird. Die in Figur 8 und 9 dargestellte Ausführungsform des Montageelementes 3 weist den Vorteil auf, dass die auf die Auflagefläche 10c wirkenden Kräfte der Fertigbauwand 10 gut über die Gewinde 3e und 4a auf den zweiten Befestigungsabschnitt 4c übertragbar sind. Die in Figur 8 und 9 dargestellte Ausführungsform des Montageelementes 3 weist den weiteren Vorteil auf, dass die minimale Höhe H, das heisst der minimale Abstand der Unterkante 10e der Fertigbauwand 10 bezüglich der Oberfläche des Einbauorts 20 sehr klein eingestellt werden kann, und im Wesentlichen der vertikalen Dicke des Stützteils 3i entspricht. Mit Hilfe des Montageelementes 3 kann die Höhe H daher in einem relativ grossen Bereich eingestellt bzw. variiert werden.

Figur 9 zeigt das Montageelement 3 gemäss Figur 8 verbunden mit einem Befestigungselement 4, das in einer Bohrung 20a im Einbauort 20 verankert ist. Das Befestigungselement 4 weist einen nicht im Detail dargestellten ersten Befestigungsabschnitt 4b und einen zweiten Befestigungsabschnitt 4c auf. Das Befestigungselement 4 ist beispielswiese als eine Ankerschraube, ein Bolzenanker oder eine Betonschraube ausgestaltet, umfassend jeweils ein Aussengewinde 4a. Das Befestigungselement wird mit dem Befestigungsabschnitt 4b, z.B. mit dem Anker der Ankerschraube, in der Bohrung 20a befestigt, vorzugsweise unverdrehbar befestigt, wobei das Befestigungselement 4, und insbesondere der zweite Befestigungsabschnitt 4c wie dargestellt vorzugsweise in vertikaler Richtung verläuft. Das Befestigungselement 4 ist im zweiten Befestigungsabschnitt 4c vorzugsweise als eine Gewindestange aufweisend ein Aussengewinde 4a ausgestaltet. Besonders vorteilhaft ist das ganze Befestigungselement 4 beispielsweise als Ankerschraube, Bolzenanker oder Betonschraube ausgestaltet. Das Montageelement 3 wird durch ein Drehen um dessen Längsachse L in Drehrichtung U mit dessen Innengewinde 3e auf das Aussengewinde 4a aufgeschraubt, wobei die Eindringtiefe des Befestigungselements 4 in das Montageelement 3 durch ein entsprechendes Drehen des Montageelementes 3 in Drehrichtung U einstellbar ist. Im dargestellten Ausführungsbeispiel ist das Montageelement 3 derart angeordnet, dass die Stützfläche 3k einen vorherbestimmten Abstand H bezüglich der Oberfläche des Einbauortes 20 aufweist. In einer vorteilhaften Ausgestaltung liegt die in Figur 9 strichliert angedeutete Unterkante 10e der Fertigbauwand 10 über eine Auflagefläche 10c auf der Stützfläche 3k auf, sodass letztendlich die mit dem Montageelement 3 verbunden Fertigbauwand 10 einen Abstand H bezüglich der Oberfläche des Einbauorts 20 aufweist.

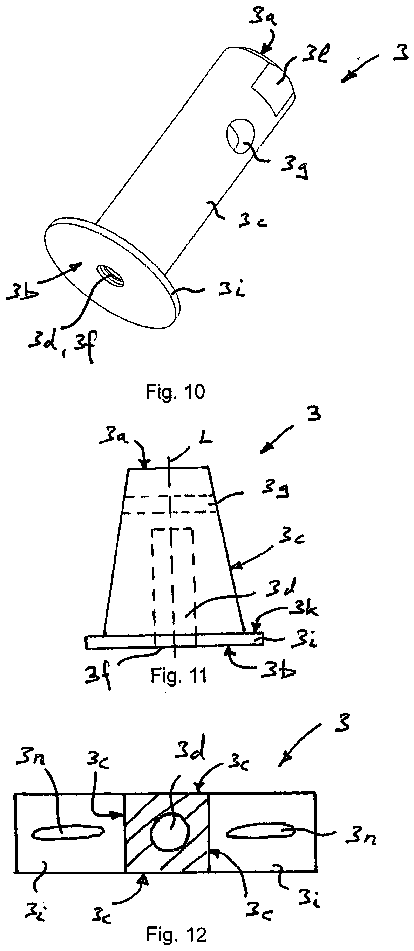

Figur 10 zeigt ein weiteres Ausführungsbeispiel eines Montageelementes 3 mit oberer Stirnseite 3a, unterer Stirnseite 3b, Innenbohrung 3d bzw. Bohrungsöffnung 3f, Seitenfläche 3c und einer Querbohrung 3g. Das dargestellte Montageelement 3 weist eine einzige Querbohrung 3g auf, könnte jedoch vorteilhafterweise, wie bereits beschrieben, auch mehrere in Umfangsrichtung versetzt angeordnete Querbohrungen 3g aufweisen. Im Unterschied zur Ausführungsform gemäss Figur 8 ist in Figur 10 der Abschnitt zwischen Querbohrung 3g und oberer Stirnseite 3a länger ausgestaltet, und weist vorteilhafterweise ein Werkzeugeingriff 3l auf, an welchem ein entsprechend angepasstes Werkzeug angelegt werden kann, beispielsweise um das Montageelement 3 sicher und reproduzierbar in Umfangsrichtung U zu drehen. Vorteilhafterweise wird der Werkzeugeingriff 3l mit einem Nivelliergerät verbunden, welches das Montageelement 3 durch Drehen in Umfangsrichtung U in eine vorherbestimmte Höhe H einstellt.

Figur 11 zeigt ein weiteres Ausführungsbeispiel eines Montageelementes 3, dessen Seitenfläche 3c kegelstumpfförmig verlaufend ausgestaltet ist. Ansonsten ist das Montageelement 3 ähnlich ausgestaltet wie in Figur 10 dargestellt, nämlich umfassend eine obere Stirnseite 3a, eine untere Stirnseite 3b, eine Innenbohrung 3d, eine Querbohrung 3g sowie ein Stützteil 3i. Bei diese Ausführungsform kann die Stützfläche 3k und/oder die obere Stirnseite 3a und/oder die Seitenfläche 3c als Fläche zum Abstützen bzw. zum Tragen der Fertigbauwand 10 dienen.

Figur 12 zeigt in einer Draufsicht, teilweise im Schnitt, ein weiteres Ausführungsbeispiel eines Montageelementes 3. Das Montageelement 3 ist entlang des ersten Teilabschnittes L1 geschnitten und zeigt eine quadratische Form mit entsprechend gegenseitig senkrecht verlaufenden Seitenflächen 3c und einer senkrecht zur Betrachtungsebene verlaufenden Innenbohrung 3d. Das Stützteil 3i ist rechteckig ausgestaltet, und kann beispielsweise zudem noch vorstehende Elemente 3n aufweisen, die beispielsweise als Leitelemente oder als Zähne ausgestaltet sind, um beispielsweise an einer Unterkante 10e einer Fertigbauwand 10 einzugreifen.

In Umfangsrichtung der Längsachse L kann die Aussenkontur des Montageelementes 3, abgesehen vom allfällig vorhandenen Stützteil 3i, generell in einer Vielzahl von Formen ausgestaltet sein, zum Beispiel mehreckig, beispielsweise drei-, vier-, sechs- oder achteckig-, wobei die Seitenlängen vorzugsweise gleich lang sind. Die Aussenkontur könnte jedoch auch abgerundet verlaufend ausgestaltet sein, beispielsweise elliptisch, oder einer Mischform von eckig und rund. Ebenso kann die Aussenkontur das Stützteil 3i unter Ausbildung einer Stützfläche 3k in einer Vielzahl von Formen ausgestaltet sein, zum Beispiel mehreckig, beispielsweise drei-, vier-, sechs- oder achteckig-, wobei die Seitenlängen vorzugsweise gleich lang sind. Die Aussenkontur könnte jedoch auch abgerundet verlaufend ausgestaltet sein, oder einer Mischform von eckig und rund.

### Bezugszeichenliste

- 1: Wandsystem
- 2: Befestigungsvorrichtung
- 3: Montageelement
- 3a: obere Stirnseite
- 3b: untere Stirnseite
- 3c: Seitenfläche
- 3d: Innenbohrung, Sackloch
- 3e: Innengewinde
- 3f: Bohrungsöffnung
- 3g: Querbohrung
- 3h: Seitenwand
- 3i: Stützteil
- 3k: Stützfläche
- 3l: Werkzeugeingriff
- 3m: Verbindungsstellen
- 3n: vorstehendes Element
- 3o: Unterseite
- 3p: Oberseite
- 4: Befestigungselement
- 4a: Aussengewinde
- 4b: erster Befestigungsabschnitt
- 4c: zweiter Befestigungsabschnitt
- 5: Arretierelement
- 5a: Stirnseite Arretierelement
- 10: Fertigbauwand
- 10a: Ausnehmungen / Innenbohrung / Aufnahmehohlraum / Aufnahmeöffnung
- 10b: Arretierkanal
- 10c: Auflagefläche Fertigbauwand
- 10d: Wandaussenfläche
- 10e: Unterkante Fertigbauwand
- 10f: zweite Auflagefläche
- 20: Einbauort, Untergrund, Fundament, Boden
- 20a: Bohrung
- L: Längsachse
- L1: erster Teilabschnitt
- L2: zweiter Teilabschnitt
- D1: Innenquerschnitt
- D2: Aussenquerschnitt
- H: Höhe
- U: Umdrehungsrichtung

## Patentansprüche

1. Wandsystem (1) umfassend zumindest eine Fertigbauwand (10) sowie mehrere Befestigungsvorrichtungen (2), wobei die Fertigbauwand (10) für jede der Befestigungsvorrichtungen (2) mit einer Ausnehmung (10a) versehen ist,
wobei jede der Befestigungsvorrichtungen (2) ein Montageelement (3), ein Befestigungselement (4) und ein Arretierelement (5) umfasst,
wobei das Montageelement (3) eine Längsachse (L) aufweist und in Verlaufsrichtung der Längsachse (L) einen ersten Teilabschnitt (L1) und anschliessend einen zweiten Teilabschnitt (L2) aufweist,
wobei das Montageelement (3) entlang des ersten Teilabschnittes (L1) eine konzentrisch zur Längsachse (L) verlaufende, vorzugsweise als Sackloch ausgestaltete Innenbohrung (3d) mit einem Innengewinde (3e) aufweist, und wobei das Montageelement (3) im Bereich des zweiten Teilabschnittes (L2) eine senkrecht zur Längsachse (L) verlaufende Querbohrung (3g) aufweist,
wobei das Befestigungselement (4) über den Einbauort (20) vorsteht,
wobei das Befestigungselement (4) ein Aussengewinde (4a) umfasst, welches in die Innenbohrung (3d) eingeschraubt ist,
wobei das Montageelement (3) in der zugehörigen Ausnehmung (10a) angeordnet ist wobei die Fertigbauwand (10) auf dem Montageelement (3) aufliegt, und
wobei das Arretierelement (5) durch die Querbohrung (3g) des Montageelementes (3) und zumindest teilweise durch die Fertigbauwand (10) verläuft, **dadurch gekennzeichnet, dass** die Fertigbauwand (10) mittels mehrerer Befestigungsvorrichtungen (2) mit einem Einbauort (20) in Form einer Bauplattform oder eines Fundaments, verbunden ist.

2. Wandsystem nach Anspruch 1, **dadurch gekennzeichnet, dass** das Befestigungselement (4) fest im Einbauort (20) verankert ist.

3. Wandsystem nach einem der vorhergehenden Ansprüche, **dadurch gekennzeichnet, dass** die Querbohrung (3g) eine durchgehende Bohrung ist, die sich durch das Montageelement (3) erstreckt, wobei die Querbohrung (3g) eine Unterseite (3o) aufweist, entlang welcher eine durchgehende Linie oder Fläche verläuft, sodass das in die Querbohrung (3g) eingeführtes Arretierelement (5) von der Eingangsöffnung bis zur Ausgangsöffnung der Querbohrung (3g) an der Unterseite (3o) anliegen kann.

4. Wandsystem nach einem der vorhergehenden Ansprüche, **dadurch gekennzeichnet, dass** das Montageelement (3) zylinderförmig oder kegelstumpfförmig ausgestaltet ist.

5. Wandsystem nach Anspruch 4, **dadurch gekennzeichnet, dass** das Montageelement (3) im Bereich des ersten Teilabschnittes (L1) einen Aussendurchmesser (D2) aufweist, der zumindest doppelt so gross wie der Innendurchmesser (D1) der Innenbohrung (3d).

6. Wandsystem nach einem der vorhergehenden Ansprüche, **dadurch gekennzeichnet, dass** das Montageelement (3) eine in Richtung der Längsachse (L) verlaufende Seitenfläche (3c) aufweist, und zudem ein sich radial von der Längsachse (L) wegerstreckendes, über die Seitenfläche (3c) vorstehendes Stützteil (3i) aufweist, insbesondere ausgestaltet als ein Flansch, wobei das Stützteil (3i) in Verlaufsrichtung der Längsachse (L), im Bereich des ersten Teilabschnittes (L1), das eine Ende des Montageelementes (3) ausbildet, und dass das Montageelement (3) im Bereich des zweiten Teilabschnittes (L2) eine obere, vorzugsweise vollflächige Stirnseite (3a) aufweist, welche das andere Ende des Montageelementes (3) ausbildet.

7. Wandsystem nach Anspruch 6, **dadurch gekennzeichnet, dass** der Stützteil (3i) einen Aussendurchmesser im Bereich von 3 cm bis 6 cm aufweist.

8. Wandsystem nach einem der Ansprüche 6 bis 7, **dadurch gekennzeichnet, dass** das Stützteil (3i) ausserhalb der Ausnehmung (10a) an der zugehörigen Fertigbauwand (10) anliegt.

9. Wandsystem nach einem der vorhergehenden Ansprüche, **dadurch gekennzeichnet, dass** im zweiten Teilabschnitt (L2) zwei senkrecht zur Längsachse (L) verlaufende Querbohrungen (3g) angeordnet sind, welche in Umfangsrichtung zur Längsachse (L) gegenseitig um 90° versetzt angeordnet sind, und welche in Verlaufsrichtung der Längsachse (L) in gleicher Höhe angeordnet sind.

10. Wandsystem nach einem der vorhergehenden Ansprüche, **dadurch gekennzeichnet, dass** die Fertigwand (10) einen Arretierkanal (10b) aufweist, durch welchen das Arretierelement (5) verläuft, wobei der Durchmesser des Arretierkanals (10b) dem Durchmesser des Arretierelementes (5) derart angepasst ist, dass die Fertigbauwand über den Arretierkanal (10b) formschlüssig oder im Wesentlichen spielfrei mit dem Arretierelement (5) verbunden ist.

11. Wandsystem nach einem der vorherigen Ansprüche, **dadurch gekennzeichnet, dass** das Arretierelement (5) als ein Stabdübel ausgestaltet ist, mit einer Länge im Bereich von 4- bis 10-mal dem Aussendurchmesser (D2) des Montageelementes (3).

12. Wandsystem nach Anspruch 11, **dadurch gekennzeichnet, dass** das Arretierelement (5) einen Durchmesser im Bereich von 5 mm bis 20 mm aufweist.

13. Verfahren zum Erstellen eines Wandsystems (1) gemäss einem der Ansprüche 1 bis 12, indem eine Fertigbauwand (10) aufweisend Ausnehmung (10a) erstellt wird, indem eine Mehrzahl von Befestigungselementen (4) umfassend Aussengewinde (4a) an vorherbestimmten Einbauorten (20) derart verankert werden, dass die Aussengewinde (4a) in vertikaler Richtung verlaufend über die Einbauorte (20) vorstehen, indem je ein Montageelement (3) durch Drehen um dessen Längsachse (L) auf die jeweiligen Aussengewinde (4a) aufgeschraubt werden und durch das Drehen zudem jedes Montageelement (3) auf eine vorherbestimmte Höhe (H) eingestellt wird, indem die Fertigbauwand (10) abgesenkt wird bis die Montageelemente (3) zumindest teilweise in die entsprechende Ausnehmung (10a) zu liegen kommen, und indem jeweils ein Arretierelement (5) durch die Querbohrung (3g) des Montageelementes (3) und zumindest teilweise durch die Fertigbauwand (10) verlaufend eingeführt wird, sodass die Fertigbauwand (10) fest mit dem Einbauort (20) verbunden ist, wobei der Einbauort (20) eine Bauplattform oder ein Fundament ist, und dass die Befestigungselemente (4) verdrehfest im Einbauort (20) verankert werden.

14. Verfahren nach Anspruch 13, **dadurch gekennzeichnet, dass** basierend auf einem Bohrplan die Löcher für die Befestigungselemente (4) am Einbauort (20) positioniert und gebohrt werden, und dass basierend auf einem Höhenplan die Höhe (H) der einzelnen Montageelemente (3) eingestellt wird, vorzugsweise automatisch über eine am Montageelement (3) angreifende Antriebsvorrichtung, welche das Montageelement (3) entsprechend dreht.

## Claims

1. Wall system (1) comprising at least one prefabricated wall (10) and a plurality of fastening devices (2), wherein the prefabricated wall (10) is provided with a recess (10a) for each of the fastening devices (2), wherein each of the fastening devices (2) comprises a mounting element (3), a fastening element (4) and a locking element (5), wherein the mounting element (3) has a longitudinal axis (L) and, in the direction of the longitudinal axis (L), has a first section (L1) and then a second section (L2), wherein the mounting element (3) has, along the first section (L1), an inner bore (3d) extending concentrically to the longitudinal axis (L) preferably designed as a blind hole, with an internal thread (3e), and wherein the mounting element (3) has a transverse bore (3g) extending perpendicular to the longitudinal axis (L) in the region of the second section (L2), wherein the fastening element (4) protrudes beyond the installation location (20), wherein the fastening element (4) comprises an external thread (4a) which is screwed into the inner bore (3d), wherein the mounting element (3) is arranged in the corresponding recess (10a), wherein the prefabricated wall (10) rests on the mounting element (3), and wherein the locking element (5) passes through the transverse bore (3g) of the mounting element (3) and at least partially through the prefabricated wall (10), **characterized in that** the prefabricated wall (10) is connected by means of a plurality of fastening devices (2) to an installation location (20) which is in the form of a construction platform or a foundation.

2. Wall system according to claim 1, **characterized in that** the fastening element (4) is firmly anchored in the installation location (20).

3. Wall system according to one of the preceding claims, **characterized in that** the transverse bore (3g) is a through bore extending through the mounting element (3), wherein the transverse bore (3g) has an underside (3o) along which a continuous line or surface runs, so that the locking element (5) inserted into the transverse bore (3g) can bear against the underside (3o) from the entrance opening to the exit opening of the transverse bore (3g).

4. Wall system according to one of the preceding claims, **characterized in that** the mounting element (3) is cylindrical or in the shape of a truncated cone.

5. Wall system according to claim 4, **characterized in that** the mounting element (3) has an outer diameter (D2) in the region of the first section (L1) which is at least twice as large as the inner diameter (D1) of the inner bore (3d).

6. Wall system according to one of the preceding claims, **characterized in that** the mounting element (3) has a side surface (3c) extending in the direction of the longitudinal axis (L) and also has a support part (3i) extending radially away from the longitudinal axis (L) and projecting beyond the side surface (3c), in particular designed as a flange, wherein the support part (3i) extends in the direction of the longitudinal axis (L) in the region of the first section (L1) forming one end of the mounting element (3), and the mounting element (3) has an upper, preferably full-surface end face (3a) in the region of the second section (L2), which forms the other end of the mounting element (3).

7. Wall system according to claim 6, **characterized in that** the support part (3i) has an outer diameter in the range of 3 cm to 6 cm.

8. Wall system according to one of claims 6 to 7, **characterized in that** the support part (3i) rests against the corresponding prefabricated wall (10) outside the recess (10a).

9. Wall system according to one of the preceding claims, **characterized in that** in the second section (L2), two transverse bores (3g) are arranged perpendicular to the longitudinal axis (L), which are offset from each other by 90° in the circumferential direction relative to the longitudinal axis (L) and which are arranged at the same height in the direction of the longitudinal axis (L).

10. Wall system according to one of the preceding claims, **characterized in that** the prefabricated wall (10) has a locking channel (10b) through which the locking element (5) passes, wherein the diameter of the locking channel (10b) is adapted to the diameter of the locking element (5) in such a way that the prefabricated wall is connected to the locking element (5) via the locking channel (10b) in a form-fitting manner or essentially without play.

11. Wall system according to one of the previous claims, **characterized in that** the locking element (5) is designed as a dowel rod with a length in the range of 4 to 10 times the outer diameter (D2) of the mounting element (3).

12. Wall system according to claim 11, **characterized in that** the locking element (5) has a diameter in the range of 5 mm to 20 mm.

13. Method for producing a wall system (1) according to one of claims 1 to 12, in which a prefabricated wall (10) having a recess (10a) is produced by anchoring a plurality of fastening elements (4) comprising external threads (4a) at predetermined installation locations (20) in such a way that the external threads (4a) protrude in a vertical direction beyond the installation locations (20), by screwing a mounting element (3) onto each of the external threads (4a) by rotating it about its longitudinal axis (L) and by also adjusting each mounting element (3) to a predetermined height (H) by rotating it, by lowering the prefabricated wall (10) until the mounting elements (3) come to rest at least partially in the corresponding recess (10a), and by inserting a locking element (5) through the transverse bore (3g) of the mounting element (3) and at least partially through the prefabricated wall (10), so that the prefabricated wall (10) is firmly connected to the installation location (20), wherein the installation location (20) is a construction platform or a foundation, and in that the fastening elements (4) are anchored in the installation location (20) in a rotationally fixed manner.

14. Method according to claim 13, **characterized in that** that based on a drilling plan, the holes for the fastening elements (4) are positioned and drilled at the installation location (20), and that based on a height plan, the height (H) of the individual mounting elements (3) is adjusted, preferably automatically via a drive device acting on the mounting element (3), which rotates the mounting element (3) accordingly.

## Revendications

1. Système de mur (1) comprenant au moins un mur préfabriqué (10) ainsi que plusieurs dispositifs de fixation (2), le mur préfabriqué (10) étant pourvu d'un évidement (10a) pour chacun des dispositifs de fixation (2),
chacun des dispositifs de fixation (2) comprenant un élément de montage (3), un élément de fixation (4) et un élément d'arrêt (5),
l'élément de montage (3) présentant un axe longitudinal (L) et, dans la direction de l'axe longitudinal (L), une première section partielle (L1) suivie d'une deuxième section partielle (L2),
l'élément de montage (3) présentant, le long du premier section partielle (L1), un alésage intérieur (3d) s'étendant concentriquement à l'axe longitudinal (L), de préférence conçu comme un trou borgne, avec un filetage intérieur (3e), et l'élément de montage (3) présentant, dans la zone du deuxième section partielle (L2), un alésage transversal (3g) s'étendant perpendiculairement à l'axe longitudinal (L),
l'élément de fixation (4) dépassant du lieu de montage (20),
l'élément de fixation (4) comprenant un filetage extérieur (4a) qui est vissé dans le alésage intérieur (3d), l'élément de montage (3) étant disposé dans l'évidement (10a) correspondant, le mur préfabriqué (10) reposant sur l'élément de montage (3), et
l'élément d'arrêt (5) s'étendant à travers l'alésage transversal (3g) de l'élément de montage (3) et au moins partiellement à travers le mur préfabriqué (10), **caractérisé en ce que** le mur préfabriqué (10) est reliée au moyen de plusieurs dispositifs de fixation (2) à un lieu de montage (20) sous la forme d'une plate-forme de construction ou d'une fondation.

2. Système de mur selon la revendication 1, **caractérisé en ce que** l'élément de fixation (4) est ancré de manière fixe dans le lieu de montage (20).

3. Système de mur selon l'une quelconque des revendications précédentes, **caractérisé en ce que** l'alésage transversal (3g) est un trou traversant qui s'étend à travers l'élément de montage (3), l'alésage transversal (3g) ayant une face inférieure (3o) le long de laquelle s'étend une ligne ou une surface continue, de sorte que l'élément d'arrêt (5) inséré dans l'alésage transversal (3g) peut venir en butée contre la face inférieure (3o) depuis l'ouverture d'entrée jusqu'à l'ouverture de sortie de l'alésage transversal (3g).

4. Système de mur selon l'une des revendications précédentes, **caractérisé en ce que** l'élément de montage (3) est de forme cylindrique ou tronconique.

5. Système de mur selon la revendication 4, **caractérisé en ce que** l'élément de montage (3) présente, dans la zone du premier section partielle (L1), un diamètre extérieur (D2) qui est au moins deux fois plus grand que le diamètre intérieur (D1) de l'alésage intérieur (3d).

6. Système de mur selon l'une des revendications précédentes, **caractérisé en ce que** l'élément de montage (3) présente une surface latérale (3c) s'étendant dans la direction de l'axe longitudinal (L), et présente en outre une pièce d'appui (3i) s'étendant radialement depuis l'axe longitudinal (L) et dépassant de la surface latérale (3c), en particulier conçue comme une bride, la pièce d'appui (3i) formant, dans la direction de l'axe longitudinal (L), dans la zone du premier section partielle (L1), l'une des extrémités de l'élément de montage (3), et **en ce que** l'élément de montage (3) présente, dans la zone du deuxième section partielle (L2), une face frontale supérieure (3a), de préférence pleine, qui forme l'autre extrémité de l'élément de montage (3) .

7. Système de mur selon la revendication 6, **caractérisé en ce que** la pièce d'appui (3i) présente un diamètre extérieur dans la plage de 3 cm à 6 cm.

8. Système de mur selon l'une des revendications 6 à 7, **caractérisé en ce que** la pièce d'appui (3i) est en contact avec le mur préfabriqué (10) associée à l'extérieur de l'évidement (10a).

9. Système de mur selon l'une des revendications précédentes, **caractérisé en ce que** dans la deuxième section partielle (L2) sont disposés deux alésages transversaux (3g) s'étendant perpendiculairement à l'axe longitudinal (L), qui sont mutuellement décalés de 90° dans la direction périphérique par rapport à l'axe longitudinal (L), et qui sont disposés à la même hauteur dans la direction d'extension de l'axe longitudinal (L).

10. Système de mur selon l'une des revendications précédentes, **caractérisé en ce que** le mur préfabriqué (10) présente un canal d'arrêt (10b) à travers lequel s'étend l'élément d'arrêt (5), le diamètre du canal d'arrêt (10b) étant adapté au diamètre de l'élément d'arrêt (5) de telle sorte que la paroi préfabriquée est reliée par le canal d'arrêt (10b) à l'élément d'arrêt (5) par complémentarité de forme ou essentiellement sans jeu.

11. Système de mur selon l'une des revendications précédentes, **caractérisé en ce que** l'élément d'arrêt (5) est conçu comme une cheville à tige, avec une longueur dans la plage de 4 à 10 fois le diamètre extérieur (D2) de l'élément de montage (3).

12. Système de mur selon la revendication 11, **caractérisé en ce que** l'élément d'arrêt (5) présente un diamètre dans la plage de 5 mm à 20 mm.

13. Procédé de construction d'un système de mur (1) selon l'une des revendications 1 à 12, dans lequel un mur préfabriqué (10) présentant un évidement (10a) est construit en ancrant une pluralité d'éléments de fixation (4) comprenant des filetages extérieurs (4a) à des lieux de montage (20) prédéterminés de telle manière, que les filetages extérieurs (4a) dépassent des lieux de montage (20) en s'étendant dans le sens vertical, en vissant chaque fois un élément de montage (3) sur les filetages extérieurs (4a) respectifs par rotation autour de son axe longitudinal (L) et en réglant en outre chaque élément de montage (3) à une hauteur (H) prédéterminée par la rotation, en abaissant le mur préfabriqué (10) jusqu'à ce que les éléments de montage (3) viennent se placer au moins partiellement dans l'évidement correspondant (10a), et en introduisant chaque fois un élément d'arrêt (5) à travers l'alésage transversal (3g) de l'élément de montage (3) et en s'étendant au moins partiellement à travers le mur préfabriqué (10), de sorte que le mur préfabriqué (10) est reliée de manière fixe au lieu de montage (20), le lieux de montage (20) étant une plate-forme de construction ou une fondation, et en ce que les éléments de fixation (4) sont ancrés de manière à résister à la torsion dans le lieu de montage (20).

14. Procédé selon la revendication 13, **caractérisé en ce que**, sur la base d'un plan de perçage, les trous pour les éléments de fixation (4) sont positionnés et percés au lieu de montage (20), et **en ce que**, sur la base d'un plan de hauteur, la hauteur (H) des différents éléments de montage (3) est réglée, de préférence automatiquement par l'intermédiaire d'un dispositif d'entraînement agissant sur l'élément de montage (3), qui fait tourner l'élément de montage (3) en conséquence.
